Europäisches Patentamt

European Patent Office

Office européen des brevets

(19)

(11) Veröffentlichungsnummer: **0 216 993**
**B1**

# EUROPÄISCHE PATENTSCHRIFT

(12)

(45) Veröffentlichungstag der Patentschrift:
24.01.90

(51) Int. Cl.⁴: **F16K 3/26, F16K 47/02**

(21) Anmeldenummer: 86106869.0

(22) Anmeldetag: 21.05.86

(54) Regelorgan für gasförmige und flüssige Medien.

(30) Priorität: 07.06.85 DE 3520491

(43) Veröffentlichungstag der Anmeldung:
08.04.87 Patentblatt 87/15

(45) Bekanntmachung des Hinweises auf die Patenterteilung:
24.01.90 Patentblatt 90/4

(84) Benannte Vertragsstaaten:
DE FR GB IT

(56) Entgegenhaltungen:
DE-B- 2 423 749
US-A- 4 258 750

(73) Patentinhaber: Masonellan HP + HP Gesellschaft mit
beschränkter Haftung, Kleinkollenburgstrasse 78-80,
D-4156 Willich 2-Anrath(DE)

(72) Erfinder: Paetzel, Herbert, Ansemsstrasse 54,
D-4054 Nettetal(DE)
Erfinder: Lindackers, Rudolf, Friedhofstrasse 13 c,
D-4056 Schwalmtal 2(DE)
Erfinder: Grutesen, Lothar, Einsteinstrasse 1,
D-4054 Nettetal 1(DE)

(74) Vertreter: Feder, Heinz, Dr. et al, Dipl.-Ing. P.-C. Sroka,
Dr. H. Feder Dipl.-Phys. Dr. W.-D. Feder, Patentanwälte
Dominikanerstrasse 37, D-4000 Düsseldorf 11(DE)

## Beschreibung

Die Erfindung betrifft ein Regelorgan für gasförmige und flüssige Medien mit einem Gehäuse, dessen Innenraum über zwei Anschlußstutzen an eine Medienquelle einerseits und einen Verbraucher andererseits anschließbar ist, wobei innerhalb des Gehäuses im Durchtrittsweg des Mediums als Absperrelemente mindestens zwei konzentrisch und an den Mantelflächen führend ineinanderliegende Rohre angeordnet sind, von denen mindestens eines fest mit dem Gehäuse verbunden ist und mindestens eines in Längsrichtung verschiebbar ist, und die Rohre so im Gehäuse angeordnet sind, daß der Außenraum des äußersten Rohres mit dem einen Anschlußstutzen und der Innenraum des innersten Rohres mit dem anderen Anschlußstutzen verbunden ist, und alle Rohre in vorgegebenen Bereichen ihrer Mantelfläche mehrere parallel zueinander verlaufende Durchtrittsschlitze aufweisen, wobei die Anordnung der Schlitze auf den Mantelflächen so ist, daß in einer Schließstellung die mit Schlitzen versehenen Bereiche der Mantelfläche jedes mit dem Gehäuse verbundenen Rohres geschlossenen Bereichen der Mantelfläche des benachbarten verschiebbaren Rohres gegenüberliegen und bei dessen Verschiebung die mit Schlitzen versehenen Bereiche benachbarter Rohre sich zunehmend überdecken.

Ein derartiges Regelorgan ist in der US-A 4 258 750 beschrieben. Durch die besondere Gestaltung der Absperrelemente soll erreicht werden, daß das Regelorgan geräuscharm ausgebildet ist.

Bei dem bekannten Regelorgan sind rechteckig oder trapezartig geformte Durchtrittsöffnungen längs der Mantellinien der Rohre angeordnet. Dies hat zur Folge, daß bei der Überdeckung der Durchtrittsöffnungen während des Öffnungsvorganges die sich ergebenden geöffneten Bereiche sich zwar vergrößern, ihre Lage aber nicht, oder nur sehr wenig verändern. Bei Medien, welche Feststoffe mit sich führen, kann dies leicht zu Verstopfungen führen.

Die der Erfindung zugrunde liegende Aufgabe bestand darin, ein Regelorgan mit den eingangs und im Oberbegriff des Patentanspruches 1 aufgeführten Merkmalen so auszubilden, daß bei geringem konstruktivem und räumlichem Aufwand eine hohe Schalldämpfung bei variabel vorgebbaren Kennlinien erreicht werden kann. Weiterhin sollte eine einfache Ausbildung von Entspannungsräumen möglich sein, und das Regelorgan sollte möglichst unempfindlich gegen Feststoffe sein.

Die Lösung dieser Aufgabe erfolgt erfindungsgemäß mit den Merkmalen aus dem kennzeichnenden Teil des Patentanspruches 1.

Vorteilhafte Ausführungsformen des erfindungsgemäßen Regelorgans sind in den Unteransprüchen beschrieben.

Das erfindungsgemäße Regelorgan weist eine Reihe beachtlicher Vorteile gegenüber herkömmlichen Ventilkonstruktionen auf.

So ist beispielsweise die Stufenzahl bei kleinstem Raumbedarf außerordentlich variabel. Es können beliebige Kennlinien erzeugt werden, insbesondere von der Anzahl der Stufen unabhängige lineare Kennlinien. Wie weiter unten anhand eines Ausführungsbeispiels erläutert, können durch entsprechende Anordnung der Schlitze hinsichtlich ihres Abstandes und ihrer Weite in den einzelnen Stufen auf kleinstem Raum Entspannungsräume geschaffen werden. Das Regelorgan ist außerordentlich unempfindlich gegen im Medium mitgeführte Feststoffe, da wegen der kurzen Durchtrittswege nur kleine Beschleunigungen auftreten. Das erfindungsgemäße Regelorgan ist sehr kostengünstig aus unterschiedlichsten Werkstoffen, beispielsweise Metall, Kunststoff, Porzellan usw., herstellbar. Auch die Anordnung von Schlitzen anstelle von Löchern verringert den Kostenaufwand gegenüber bekannten Ventilen. Auch eine weichdichtende Anordnung der Rohre ineinander ist möglich.

Selbstverständlich kann bei dem erfindungsgemäßen Regelorgan die Ausbildung der Absperrelemente in der erfindungsgemäßen Weise ergänzt werden durch die Anordnung eines zusätzlichen Ventilsitzes mit einem Ventilkegel.

Im folgenden wird anhand der beigefügten Zeichnungen ein Ausführungsbeispiel des erfindungsgemäßen Regelorgans und seine Funktion näher erläutert.

In den Zeichnungen zeigen:

Fig. 1 einen Längsschnitt durch ein Regelorgan mit insgesamt sechs konzentrisch ineinander angeordneten Rohren als Absperrelemente;

Fig 2. bis 5 in stark schematisierter Darstellung das Regelorgan nach Fig. 1 in der Schließstellung und verschiedenen Öffnungsstellungen.

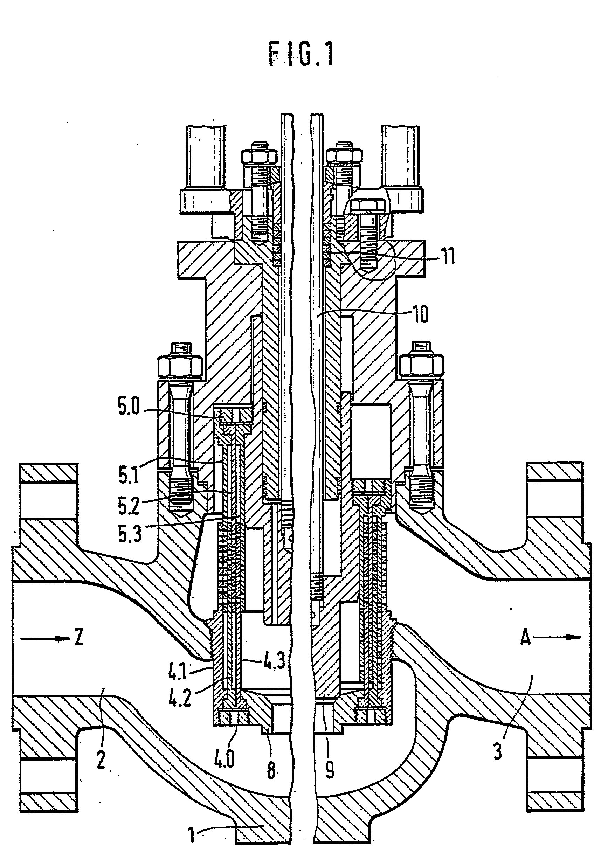

Das in Fig. 1 dargestellte Regelorgan besitzt ein Gehäuse 1, dessen Innenraum über einen Anschlußstutzen 2, der als Zulauf Z dient, an eine Mediumsquelle und über einen Anschlußstutzen 3, der als Ablauf A dient, an einen Verbraucher anschließbar ist.

Im Durchtrittsweg des Mediums sind innerhalb des Gehäuses konzentrisch ineinander Rohre 4.1, 4.2 und 4.3 mit Abständen gegeneinander angeordnet und an ihrem der Zulaufseite Z zugewandten Ende 4.0 fest und dichtend miteinander verbunden. Das äußerste Rohr 4.1 ist dichtend und fest in eine Durchtrittsöffnung innerhalb des Gehäuses 1 eingesetzt. Die Rohre 4.1 bis 4.3 weisen in ihrer oberen Hälfte, die in dem mit dem Ablauf A verbundenen Teil des Innenraums liegt, in der Mantelfläche Schlitze auf, die weiter unten näher erläutert werden.

Konzentrisch zu den fest mit dem Gehäuse 1 verbundenen Rohren 4.1, 4.2 und 4.3 sind in den Zwischenräumen zwischen diesen Rohren verschiebbare Rohre 5.1, 5.2, 5.3 angeordnet, die an ihrem in Fig. 1 oberen Ende 5.0 fest und dichtend miteinander verbunden sind. Die Rohre 5.1, 5.2 und 5.3 können, wie ersichtlich, von oben zwischen die Rohre 4.1, 4.2 und 4.3 eingeschoben und wieder herausgezogen werden. Die Rohre 5.1 bis 5.3 sind mit einer Hubspindel 10 fest verbunden, welche über Dichtungen 11 aus dem Gehäuse 1 herausgeführt ist.

In Fig. 1 zeigt der rechts von der Mittelachse der Hubspindel 10 angeordnete Teil das Regelorgan im geschlossenen Zustand, während der links von der Hubspindel 10 angeordnete Teil das Regelorgan im geöffneten Zustand darstellt.

Am in Fig. 1 unteren Ende der Rohre 4.1, 4.2, 4.3 ist innerhalb des innersten Rohres 4.3 ein Ventilsitz 8 angeordnet, dem ein mit der Hubspindel 10 verbundener Ventilkegel 9 gegenüberliegt, der zusammen mit den verschiebbaren Rohren 5.1, 5.2, 5.3 bewegbar ist und im geschlossenen Zustand des Regelorgans auf dem Ventilsitz 8 aufsitzt.

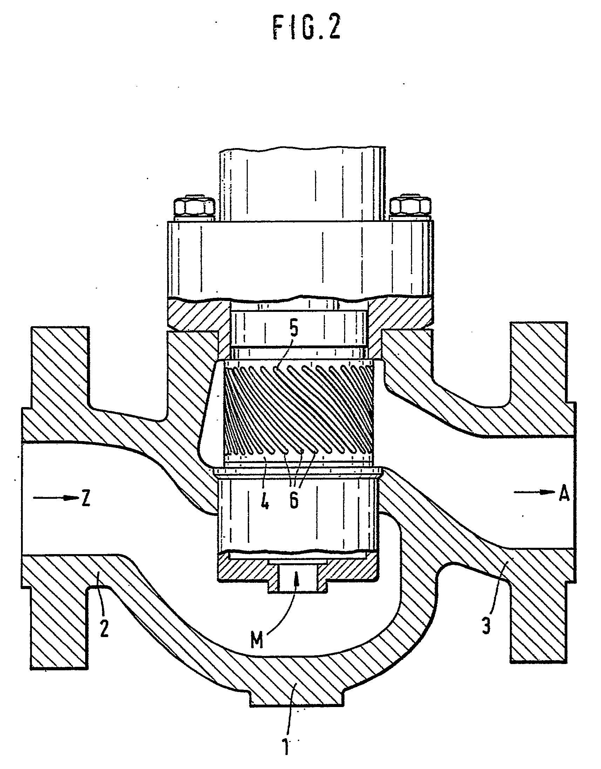

Es wird nun anhand der sehr schematisch gehaltenen Darstellung der Fig. 2 bis 5 die genauere Ausbildung der Schlitze in den Rohren 4.1 bis 4.3 und 5.1 bis 5.3 sowie die Funktionsweise des Regelorgans genauer erläutert.

Fig. 1 in Verbindung mit den Fig. 2 bis 5 ist zunächst zu entnehmen, daß die mit dem Gehäuse fest verbundenen Rohre 4.1 bis 4.3 nur in ihrer oberen Hälfte Durchtrittsschlitze aufweisen, während die verschiebbaren Rohre 5.1 bis 5.3 lediglich in ihrer unteren Hälfte Schlitze aufweisen.

In den Fig. 2 bis 5 ist zur Vereinfachung der Darstellung lediglich ein fest mit dem Gehäuse verbundenes Rohr 4 und ein in Längsrichtung verschiebbares Rohr 5 dargestellt. Das fest mit dem Gehäuse 1 verbundene Rohr 4 besitzt Durchtrittsschlitze 6, während das innerhalb des Rohres 4 liegende bewegbare Rohr 5 Durchtrittsschlitze 7 aufweist. Die Durchtrittsschlitze 6 des Rohres 4 sind in gleichmäßigen Abständen unter einem Winkel von ca. 45° zur Mantellinie angeordnet. Die Schlitze 7 des inneren verschiebbaren Rohres sind mit gleichen Abständen unter einem Winkel zur Mantellinie angeordnet, der ebenfalls ca. 45° beträgt, aber entgegengesetztes Vorzeichen aufweist. Die Schlitzscharen der beiden ineinanderliegenden Rohre 4 und 5 schneiden sich also unter einem Winkel von ca. 90°.

In Fig. 2 befindet sich das Regelorgan in der Schließstellung, in der das verschiebbare Rohr 5 ganz nach unten in das mit dem Gehäuse fest verbundene Rohr 4 eingeschoben ist. In dieser Stellung liegen die Schlitze 6 des Rohres 4 den geschlossenen Teilen der Mantelfläche des Rohres 5 gegenüber, während die in Fig. 2 nicht sichtbaren Schlitze 7 des Rohres 5 ebenfalls geschlossenen Teilen der Mantelfläche des Rohres 4 gegenüberliegen. Ein Durchtritt des von unten in Richtung M in das innere Rohr 5 eintretenden Mediums und sein Austritt aus den Schlitzen 6 in Richtung des Ablaufes A ist nicht möglich.

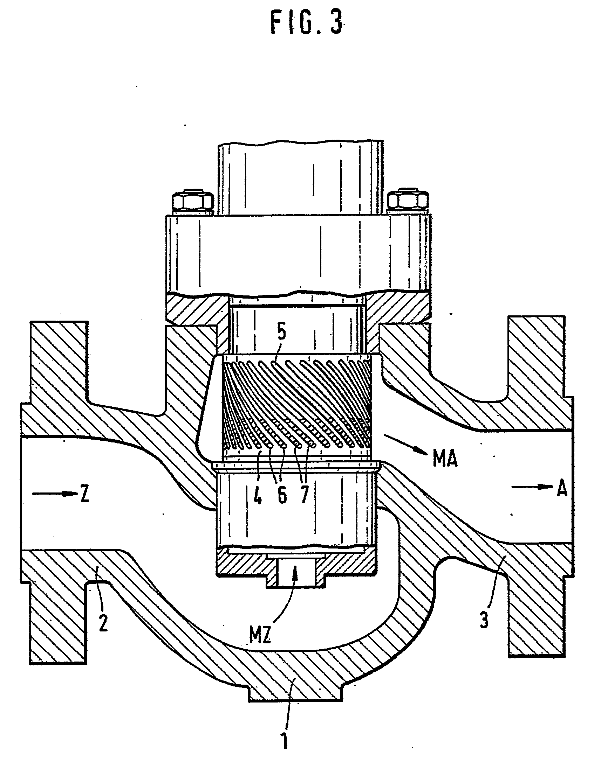

In der in Fig. 3 dargestellten Stellung des Regelorgans ist das innere Rohr 5 soweit nach oben verschoben, daß sich die mit Schlitzen versehenen Bereiche der Mantelflächen der beiden Rohre 4 und 5 zu etwa einem Drittel überdecken. Wie unmittelbar ersichtlich, entstehen durch das Schneiden der Schlitze 6 und 7 Durchtrittsöffnungen zwischen dem Innenraum des Rohres 5 und dem Außenraum des Rohres 4, so daß das in Richtung MZ in den Innenraum des Rohres 5 eintretende Medium in den Außenraum des Rohres 4 in Richtung MA austreten und zum Ablauf A abströmen kann.

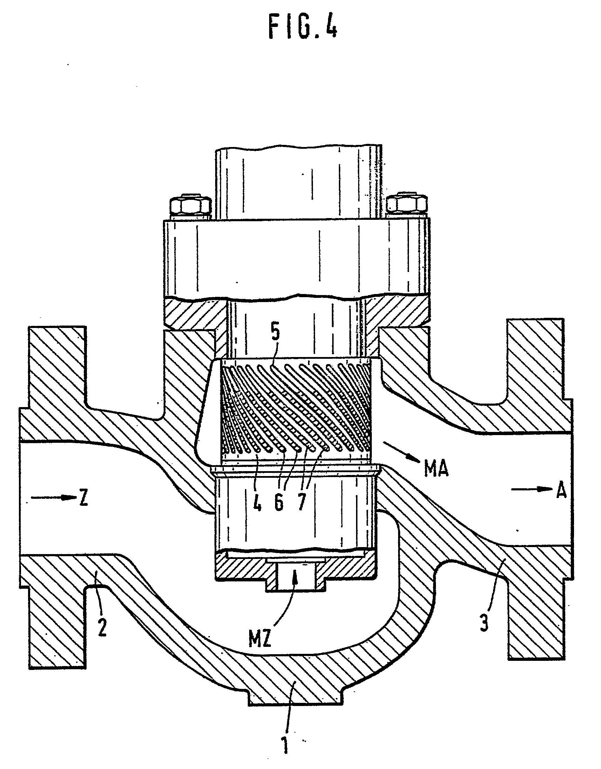

In Fig. 4 ist das Rohr 5 inzwischen soweit aus dem Rohr 4 herausgezogen, daß sich die mit Schlitzen versehenen Bereiche der Mantelflächen der Rohre um etwa zwei Drittel überdecken und entsprechend mehr Medium in Richtung zum Ablauf A abströmen kann.

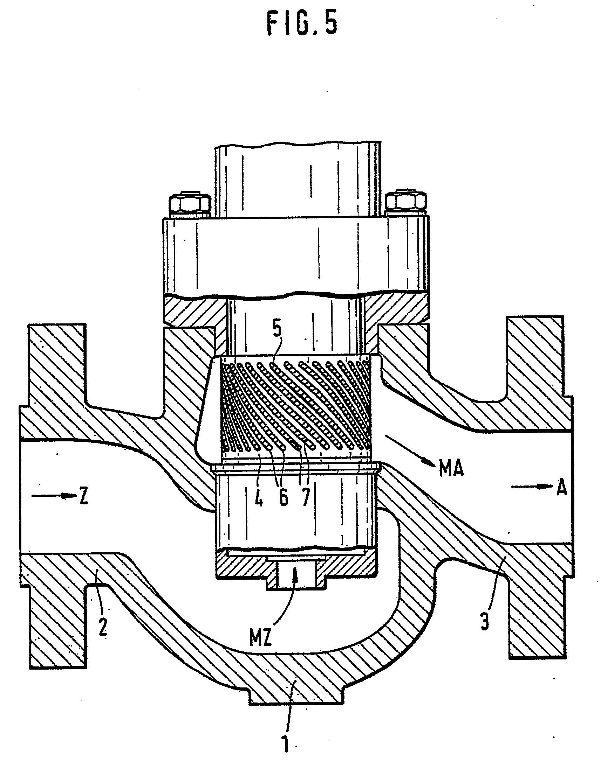

In Fig. 5 ist das innere Rohr 5 nunmehr soweit herausgezogen, daß sich die mit Schlitzen versehenen Bereiche der Mantelflächen vollständig überdecken. Es ist nun der maximale Öffnungszustand erreicht und das Medium kann in Richtung MZ in das innere Rohr 5 einströmen und in Richtung MA aus dem äußeren Rohr 4 in Richtung auf den Ablauf A abströmen.

Der anhand der Fig. 2 bis 5 geschilderte Vorgang tritt ebenso bei dem in Fig. 1 detaillierter dargestellten Regelorgan auf. Dabei können bei dem in Fig. 1 dargestellten Absperrelementen die Schlitze in den einander zugeordneten Rohrpaaren 4.1-5.1, 4.2-5.2 und 4.3-5.3 durchaus jeweils unterschiedlich angeordnet sein. So kann beispielsweise in nicht eigens dargestellter Weise die Schlitzbreite von innen nach außen zunehmen, oder die Schlitzabstände von innen nach außen abnehmen. Auf diese Weise werden in Durchströmrichtung sich erweiternde Entspannungsräume geschaffen.

Weiterhin ist es möglich, bei mehr als einem Paar von Rohren die Schlitze so anzuordnen, daß in keiner Stellung der inneren Rohre 5.1 bis 5.3 in radialer Richtung ungehinderte Durchtrittswege entstehen, in dem mehrere durch Kreuzen der Schlitze entstandene Durchtrittsöffnungen unmittelbar hintereinanderliegen.

Im Schließzustand ist der Durchtrittsweg bei dem in Fig. 1 dargestellten Regelorgan zusätzlich durch den auf dem Ventilsitz 8 aufsitzenden Ventilkegel 9 gesperrt.

Hierdurch wird erreicht, daß die einander zugeordneten Rohrpaare 4.1-5.1, 4.2-5.2 und 4.3-5.3 an ihren Mantelflächen zwar führend, aber nicht notwendig völlig gegen das Medium dichtend ineinander angeordnet zu sein brauchen.

Bei einem Verzicht auf den zusätzlichen Ventilsitz und Ventilkegel müssen die Rohre gegebenenfalls an den Mantelflächen dichtend ineinander geführt sein, um ein völliges Sperren im Schließzustand sicherzustellen.

## Patentansprüche

1. Regelorgan für gasförmige und flüssige Medien mit einem Gehäuse (1), dessen Innenraum über zwei Anschlußstutzen (2, 3) an eine Medienquelle einerseits und einen Verbraucher andererseits anschließbar ist, wobei innerhalb des Gehäuses (1) im Durchtrittsweg des Mediums als Absperrelemente mindestens zwei konzentrisch und an den Mantelflächen führend ineinander angeordnete Rohre (4, 4.1, 4.2, 4.3 bzw. 5, 5.1, 5.2, 5.3) angeordnet sind, von denen mindestens eines (4, 4.1, 4.2, 4.3) fest mit dem Gehäuse (1) verbunden ist und mindestens eines (5, 5.1, 5.2, 5.3) in Längsrichtung verschiebbar ist und die Rohre so im Gehäuse angeordnet sind, daß der Außenraum des äußersten Rohres (4, 4.1) mit dem einen Anschlußstutzen (3) und der Innenraum des innersten Rohres (5, 5.3) mit dem anderen Anschlußstutzen (2) verbunden ist und alle Rohre in vorgegebenen Bereichen ihrer Mantelfläche mehrere parallel zueinander verlaufende Durchtrittsschlitze (6, 7) aufweisen, wobei die Anordnung der Schlitze (6, 7) auf den Mantelflächen so ist, daß in einer Schließstellung die mit Schlitzen (6) versehenen Bereiche der Mantelflächen jedes mit dem Gehäuse (1) fest verbundenen Rohres (4, 4.1, 4.2, 4.3) geschlossenen Bereichen der Mantelfläche des benachbarten verschiebbaren Rohres (5, 5.1, 5.2, 5.3) gegenüberliegen und bei dessen Verschiebung die mit Schlitzen (6, 7) versehenen Bereiche benachbarter Rohre sich zunehmend überdecken, dadurch gekennzeichnet, daß jeweils die Durchtrittsschlitze (6) eines mit dem Gehäuse (1) fest verbundenen Rohres (4, 4.1, 4.2, 4.3) zu den Durchtrittsschlitzen (7) eines unmittelbar benachbarten verschiebbaren Rohres (5, 5.1, 5.2, 5.3) unter einem Winkel stehen, der von 0° bzw. 180° verschieden ist und wobei die Anordnung so ist, daß die Schlitze (6) jeweils eines der mit dem Gehäuse (1) fest verbundenen Rohre (4, 4.1, 4.2, 4.3) mit den Mantellinien des Rohres einen Winkel einschließen, dessen Betrag von 0° bzw. 180° verschieden ist und die Schlitze (7) des unmittelbar benachbarten verschiebbaren Rohres (5, 5.1, 5.2, 5.3) mit den Mantellinien dieses Rohres einen Winkel mit einem Betrag, der ebenfalls von 0° bzw. 180° verschieden ist, aber mit entgegengesetztem Vorzeichen einschließen.

2. Regelorgan nach Anspruch 1, dadurch gekennzeichnet, daß die Schlitze (7) des jeweils unmittelbar benachbarten verschiebbaren Rohres (5, 5.1, 5.2, 5.3) mit den Mantellinien dieses Rohres einen Winkel einschließen, der den gleichen Betrag aufweist, wie der Winkel, den die Schlitze (6) des mit dem Gehäuse (1) fest verbundenen Rohres (4, 4.1, 4.2, 4.3) mit den Mantellinien dieses Rohres einschließen.

3. Regelorgan nach Anspruch 1 oder 2, dadurch gekennzeichnet, daß die Abstände der Schlitze (6, 7) bei aufeinanderfolgenden Rohren unterschiedlich sind.

4. Regelorgan nach Anspruch 3, dadurch gekennzeichnet, daß die Abstände der Schlitze bei aufeinanderfolgenden Rohren in Durchströmungsrichtung abnehmen.

5. Regelorgan nach einem der Ansprüche 1 bis 3, dadurch gekennzeichnet, daß die Schlitzweiten aufeinanderfolgender Rohre in Durchströmungsrichtung zunehmen.

6. Regelorgan nach einem der Ansprüche 1 bis 5, dadurch gekennzeichnet, daß die Durchströmungsrichtung in den Rohren (4, 4.1, 4.2, 4.3 bzw. 5, 5.1, 5.2, 5.3) von innen nach außen erfolgt.

7. Regelorgan nach einem der Ansprüche 1 bis 6, dadurch gekennzeichnet, daß der Betrag des Winkels, den die Schlitze (6, 7) mit den Mantellinien der Rohre (4, 4.1, 4.2, 4.3 bzw. 5, 5.1, 5.2, 5.3) einschließen, zwischen 30° und 60° liegt.

8. Regelorgan nach Anspruch 7, dadurch gekennzeichnet, daß der Betrag des Winkels, den die Schlitze (6, 7) mit den Mantellinien der Rohre (4, 4.1, 4.2, 4.3, 5, 5.1, 5.2, 5.3) einschließen, 45° beträgt.

9. Regelorgan nach einem der Ansprüche 1 bis 8, dadurch gekennzeichnet, daß die konzentrisch ineinander angeordneten Rohre (4, 4.1, 4.2, 4.3 bzw. 5, 5.1, 5.2, 5.3) an den Mantelflächen dichtend geführt sind.

10. Regelorgan nach einem der Ansprüche 1 bis 8, dadurch gekennzeichnet, daß an dem der Zuflußseite (Z) zugewandten offenen Ende des Innersten der mit dem Gehäuse (1) fest verbundenen Rohre (4.3) ein Ventilsitz (8) angeordnet ist, dem ein konzentrisch zum Innersten der verschiebbaren Rohre (5.3) angeordneter, mit den verschiebbaren Rohren verschiebbarer Ventilkegel (9) gegenüberliegt.

11. Regelorgan nach einem der Ansprüche 1 bis 10, dadurch gekennzeichnet, daß bei mehr als zwei konzentrischen Rohren (4, 4.1, 4.2, 4.3 bzw. 5, 5.1, 5.2, 5.3) die Abstände und Anordnung der Schlitze (6, 7) auf den Mantelflächen der Rohre so unterschiedlich ist, daß in keiner Stellung der verschiebbaren Rohre (5, 5.1, 5.2, 5.3) in radialer Richtung durch sämtliche Rohre hindurchlaufende Durchtrittswege entstehen.

**Claims**

1. Control gear for gaseous and fluid agents having a housing (1) of which the inner space can be connected via two connection pieces (2, 3) to a media source on one side and to a consumer on the other side, at least two pipes (4, 4.1, 4.2, 4.3 and 5, 5.1, 5.2, 5.3) being arranged concentrically, one arranged inside the other along the jacket surfaces, inside the housing (1) in the inlet path of the medium as barrier elements, of which pipes at least one (4, 4.1, 4.2, 4.3) is connected firmly to the housing (1) and at least one (5, 5.1, 5.2, 5.3) is displaceable in longitudinal direction, the pipes being arranged in the housing in such a way that the outside space of the outermost pipe (4, 4.1) is connected to the one connecting piece (3) and the inside space of the innermost pipe (5, 5.3) is connected to the other connecting piece (2), all pipes having a plurality of inlet slits (6, 7) running parallel to one another in specified regions of their jacket surfaces, the arrangement of the slits (6, 7) on the jacket surfaces being such that in closed position the regions of the jacket surfaces provided with slits (6) of each pipe (4, 4.1, 4.2, 4.3) connected to the housing (1) are located opposite closed regions of the jacket surface of the adjacent displaceable pipe (5, 5.1, 5.2, 5.3) and when the latter is displaced, the regions provided with slits (6, 7) of adjacent pipes increasingly overlap, characterized in that the inlet slits (6) of one pipe (4, 4.1, 4.2, 4.3) firmly connected to the housing (1) are in each case at an angle, which is not equal to 0° or 180°, to the inlet slits (7) of an immediately adjacent displaceable pipe (5, 5.1, 5.2, 5.3) and in which case the arrangement is such that the slits (6) of the pipe (4, 4.1, 4.2, 4.3) firmly connected to the housing (1) are in each case at an angle, which is not equal to 0° or 180°, to the lines of the jacket of the pipe and the slits (7) of the immediately adjacent displaceable pipe (5, 5.1, 5.2 5.3) are at an angle, which is likewise not equal to 0° or 180°, to the lines of the jacket of the latter pipe, but with the opposite preceding sign.

2. Control gear according to Claim 1, characterized in that the slits (7) of each immediately adjacent displaceable pipe (5, 5.1, 5.2, 5.3) are at an angle to the lines of the jacket of this pipe, which angle has the same value as the angle at which the slits (6) of the pipe (4, 4.1, 4.2, 4.3) firmly connected to the housing (1) have to the lines of the jacket of the latter pipe.

3. Control gear according to Claim 1 or 2, characterized in that the spacings of the slits (6), (7) are different in the case of successive pipes.

4. Control gear according to Claim 3, characterized in that the spacings of the slits in the case of successive pipes decrease in through-flow direction.

5. Control gear according to one of Claims 1 to 3, characterized in that the widths of the slits of successive pipes increase in through-flow direction.

6. Control gear in accordance with one of Claims 1 to 5, characterized in that the through-flow direction in the pipes (4, 4.1, 4.2, 4.3 and 5, 5.1, 5.2, 5.3) is from inside to outside.

7. Control gear according to one of Claims 1 to 6, characterized in that the value of the angle at which the slits (6, 7) are to the lines of the jacket of the pipes (4, 4.1, 4.2, 4.3 and 5, 5.1, 5.2, 5.3) lies between 30° and 60°.

8. Control gear according to Claim 7, characterized in that the value of the angle at which the slits (6, 7) are to the lines of the jacket of the pipes (4, 4.1, 4.2, 4.3, 5, 5.1, 5.2, 5.3) is 45°.

9. Control gear according to one of Claims 1 to 8, characterized in that the pipes (4, 4.1, 4.2, 4.3, and 5, 5.1, 5.2, 5.3) arranged concentrically one inside the other are movable at the jacket surfaces in a sealing manner.

10. Control gear according to one of Claims 1 to 8, characterized in that a valve seat (8) is arranged at the open end facing the inflow side (Z) of the innermost of the pipes (4.3) firmly connected to the housing (1), opposite which valve seat (8) a valve cone (9) is arranged concentrically to the innermost of the displaceable pipes (5.3) and displaceably with the displaceable pipes.

11. Control gear according to one of Claims 1 to 10, characterized in that, in the case of more than two concentric pipes (4, 4.1, 4.2, 4.3 and 5, 5.1, 5.2, 5.3), the spacings and arrangement of the slits (6, 7) on the jacket surfaces of the pipes are different such that in no position of the displaceable pipes (5, 5.1, 5.2, 5.3) do inlet paths arise passing through all the pipes in radial direction.

## Revendications

1. Organe de réglage pour fluides gazeux et liquides comportant un boîtier (1) dont l'espace intérieur peut être raccordé par deux raccords (2, 3) d'une part à une source de fluide et d'autre part à un consommateur, à l'intérieur du boîtier (1), dans la voie de passage du fluide et servant d'éléments de blocage, étant disposés concentriquement l'un dans l'autre au moins deux tubes (4, 4.1, 4.2, 4.3 ou 5, 5.1, 5.2, 5.3) passant le long des faces enveloppantes, tubes dont au moins un (4, 4.1, 4.2, 4.3) est relié de manière fixe au boîtier et au moins un (5, 5.1, 5.2, 5.3) pouvant être déplacé dans le sens longitudinal ces tubes étant disposés à l'intérieur du boîtier de telle sorte que l'espace extérieur du tube le plus externe (4, 4.1) est relié à l'un des raccords (3) et l'espace intérieur du tube le plus interne (5, 5.3) est relié à l'autre raccord (2) et que tous les tubes présentent dans des zones prédéterminées de leurs faces latérales plusieurs fentes de passage (6, 7) parallèles les unes aux autres, la disposition des fentes (6 et 7) sur les faces latérales étant telle que dans une position de fermeture des zones des faces latérales munies de fentes (6) de chaque tube (4, 4.1, 4.2, 4.3) reliés de manière fixe au boîtier (1) soient opposées à des zones fermées de la face latérale du tube adjacent pouvant être déplacé (5, 5.1, 5.2, 5.3) et que lors du déplacement dudit tube les zones munies de fentes (6, 7) des tubes adjacents se recouvrent de manière progressive, caractérisé par le fait que les fentes de passage (6) d'un tube (4, 4.1, 4.2, 4.3) relié de manière fixe au boîtier (1) soient placées respectivement sous un certain angle par rapport aux fentes de passage (7) d'un tube pouvant être déplacé (5, 5.1, 5.2, 5.3) immédiatement adjacent, cet angle étant différent de 0 ou de 180° et la disposition étant telle que les fentes (6) d'un tube (4, 4.1, 4.2, 4.3), relié de manière fixe au boîtier (1), forment un angle avec les lignes latérales du tube dont la valeur est différente de 0° ou de 180° et que les fentes (7) du tube (5, 5.1, 5.2, 5.3) pouvant être déplacé immédiatement adjacent forment un angle avec les lignes latérales de ce tube dont la valeur est également différente de 0 ou de 180° mais de signe contraire.

2. Organe de réglage selon la revendication 1, caractérisé par le fait que les fentes (7) du tube (5, 5.1, 5.2, 5.3) pouvant être déplacé respectivement immédiatement adjacent forment avec les lignes latérales de ce tube un angle qui a la même valeur que l'angle formé par les fentes (6) du tube (4, 4.1, 4.2, 4.3) relié fixement au boîtier (1) et les lignes latérales de ce même tube.

3. Organe de réglage selon la revendication 1 ou 2, caractérisé par le fait que les distances entre les fentes (6, 7) sont différentes pour des tubes successifs.

4. Organe de réglage selon la revendication 3, caractérisé par le fait que les distances entre les fentes pour des tubes consécutifs diminuent en direction du passage du flux.

5. Organe de réglage selon l'une des revendications 1 à 3, caractérisé par le fait que les largeurs des fentes de tubes consécutifs augmentent en direction du passage du flux.

6. Organe de réglage selon l'une des revendications 1 à 5, caractérisé par le fait que le passage du flux à l'intérieur des tubes (4, 4.1, 4.2, 4.3 et 5, 5.1, 5.2, 5.3) se dirige de l'intérieur vers l'extérieur.

7. Organe de réglage selon l'une des revendications 1 à 6, caractérisé par le fait que la valeur de l'angle formé par les fentes (6, 7) et les lignes latérales des tubes (4, 4.1, 4.2, 4.3 ou 5, 5.1, 5.2, 5.3) se situe entre 30 et 60°.

8. Organe de réglage selon la revendication 7, caractérisé par le fait que la valeur de l'angle formé par les fentes (6, 7) et les lignes latérales des tubes (4, 4.1, 4.2, 4.3; 5, 5.1, 5.2, 5.3) s'élève à 45°.

9. Organe de réglage selon l'une des revendications 1 à 8, caractérisé par le fait que les tubes (4, 4.1, 4.2, 4.3 et 5, 5.1, 5.2, 5.3) disposés concentriquement les uns dans les autres passent de manière étanche sur les faces latérales.

10. Organe de réglage selon l'une des revendications 1 à 8, caractérisé par le fait que sur l'extrémité ouverte orientée vers le côté d'arrivée du flux (Z) du tube le plus intérieur (4.3) relié de manière fixe au boîtier (1) est disposé un siège de soupape (8) vis-à-vis duquel se trouve un cône de soupape (9) pouvant être déplacé avec les tubes mobiles et disposé concentriquement par rapport au tube mobile (5.3) le plus interne.

11. Organe de réglage selon l'une des revendications 1 à 10, caractérisé par le fait qu'en cas de présence de plus de deux tubes (4, 4.1, 4.2, 4.3 et 5, 5.1, 5.2, 5.3) disposés concentriquement les distances et la disposition des fentes (6, 7) sur les faces latérales des tubes sont d'une différence telle qu'en aucune position des tubes mobiles (5, 5.1, 5.2, 5.3) se produisent des voies de passage passant en direction radiale à travers la totalité des tubes.

# FIG.1

# FIG.2

# FIG. 3

# FIG.4

# FIG.5